# FASCICULE DE BREVET EUROPEEN

(11) **EP 4 316 946 B1**
(45) Date de publication et mention de la délivrance du brevet: **30.10.2024**
(21) Numéro de dépôt: 23189291.0
(22) Date de dépôt: 02.08.2023
(51) Int. Cl.: B62B 1/12, A47C 1/14, A47C 13/00, B62B 5/08

(54) **CHARIOT TRANSFORMABLE**
UMWANDELBARER WAGEN
TRANSFORMABLE TROLLEY

(30) Priorité: 05.08.2022 FR 2208146
(43) Date de publication de la demande: 07.02.2024
(73) Titulaire: S.A.T.P, 49300 Cholet (FR)
(72) Inventeur: MONTIGNY, Jean-Pierre, 49300 CHOLET (FR)
(74) Mandataire: Cabinet Chaillot

(56) Documents cités:
- WO-A1-2016/059272
- FR-A1- 3 021 853
- US-A1- 2022 175 140

## Description

La présente invention porte sur un chariot de courses transformable apte à passer de sa position proprement dite « chariot de courses » à l'une des positions suivantes : « chariot-diable » ; « siège » ; « chaise longue » et « banquette ».

On connaît par le document FR 3021853 A1 un ensemble modulaire transformable qui peut prendre plusieurs positions comme les positions de chaise longue, chariot chaise et diable de transport.

Ces dispositifs transformables sont le plus souvent utilisés sur la plage où la présence de sable peut être un problème pour les articulations mécaniques de tels dispositifs transformables. En particulier, l'utilisation de glissière peut être rendue difficile par la présence du sable.

Egalement de tels dispositifs doivent être d'une grande simplicité dans leur fonctionnement et doivent présenter un nombre minimal de pièces pour constituer le chariot.

Par exemple, afin de se présenter dans sa version chariot, le dispositif présenté dans le document FR 3021853 A1 présente des panneaux surnuméraires pour former les flancs du chariot, ces panneaux venant se placer dans des profilés en forme de U formant glissière.

L'utilisation de ces panneaux surnuméraires augmentent le poids du chariot et augmente son coût de fabrication afin de constituer la position chariot de ce dispositif transformable. De plus, l'utilisation de glissières rend l'emploi d'un tel chariot plus difficile, par exemple sur une plage, le sable pouvant se placer dans les glissières et rendant plus difficile la disposition des panneaux surnuméraires.

A cet effet, la présente invention porte sur un chariot de courses transformable apte à passer de sa position proprement dite « chariot de courses » à l'une des positions suivantes :
- « Chariot-diable » ;
- « siège » ;
- « chaise longue » ; et
- « banquette »,
comportant une ossature montée sur au moins une roue, caractérisé par le fait que l'ossature est réalisée en quatre parties, à savoir :
- une ossature dite centrale A formée de deux bras latéraux identiques parallèles qui comptent chacun une partie centrale se prolongeant à une première extrémité par un premier repli et à l'autre extrémité par un second repli du même côté que le premier repli, les parties centrales de ces deux bras étant réunies par au moins une bande de matière ;
- du côté des premiers replis de la partie centrale, une ossature dite de première extrémité B formée de deux bras latéraux identiques parallèles qui comportent chacun une partie centrale se prolongeant à une première extrémité par un premier repli et à l'autre extrémité par un second repli du même côté que le premier repli, les parties centrales de ces deux bras étant réunies par au moins une bande de matière ; chaque second repli de l'ossature de première extrémité B étant monté mobile en rotation sur chaque premier repli de l'ossature centrale A ;
- du côté des seconds replis de l'ossature centrale A, une ossature dite de seconde extrémité C formée de deux bras latéraux identiques parallèles réunis par au moins une bande de matière, montés aptes à pivoter par une de leurs extrémités en un point du bras latéral correspondant de l'ossature centrale A qui se trouve au voisinage du début du second repli de cette dernière ;
- une pièce dite de support D comportant deux bordures latérales articulées chacune à l'extrémité correspondante des seconds replis des bras latéraux de l'ossature centrale A, et une bordure transversale d'extrémité apte à venir bloquer l'ossature de seconde extrémité C dans une position inclinée par rapport à l'ossature centrale A ;
ladite ou lesdites roues étant portées par au moins un bras latéral de l'ossature centrale A dans sa seconde partie de repli, l'axe de la ou des roues étant perpendiculaire aux bras latéraux de l'ossature centrale A ;
- la position « chariot de courses » étant obtenue par application l'une contre l'autre de l'ossature centrale A et de l'ossature de seconde extrémité C, un moyen de blocage amovible de ces deux ossatures étant prévu, et par mise en appui des deux premiers replis de l'ossature de première extrémité B contre les seconds replis respectifs de l'ossature centrale A ; et la pièce support D étant, en position totalement relevée, un moyen de blocage amovible étant prévu pour maintenir dans cette position l'ossature de première extrémité B contre l'ossature centrale A et au moins un moyen de blocage amovible étend prévu pour maintenir la pièce de support D dans sa position relevée ;
- la position « chariot-diable » différant de la position « chariot de courses » par le fait que la pièce de support D est rabattue, un moyen de blocage amovible étant prévu pour maintenir l'ossature de première extrémité B contre l'ossature centrale A ;
- la position « siège » différant de la position « chariot de courses » par le fait que l'ossature de seconde extrémité C est inclinée par rapport à l'ossature centrale A, et que la pièce de support D vient bloquer l'ossature de seconde extrémité C dans sa position inclinée ;
- la position « chaise longue » différant de la position siège par le fait que l'ossature de première extrémité B est placée dans le prolongement de l'ossature centrale A ;
- la position « banquette » différant de la position « chaise longue » par le fait que la pièce de support D est dans sa position appliquée contre l'ossature centrale A et que l'ossature de seconde extrémité C vient dans le prolongement de l'ossature centrale A.

Les replis de l'ossature de seconde extrémité (C) ainsi que les remplis de l'ossature centrale (A) permettent de former les bordures et les flancs du chariot dans sa position « chariot de courses » et « chariot-diable » permettant ainsi d'éviter le recours à des pièces surnuméraires pour les former.

Les deux premiers replis de l'ossature centrale A peuvent être reliés pour former une pièce en U.

La base du U qui relie les deux premiers replis de l'ossature centrale A peut porter un moyen d'accrochage du chariot à un moyen de locomotion, tel qu'une bicyclette.

Les deux premiers replis de l'ossature de première extrémité B peuvent être reliés pour former un U, lequel porte avantageusement le moyen d'accrochage amovible à la pièce de support.

Les deux bras latéraux de l'ossature de seconde extrémité C peuvent être réunis à leurs bordures opposées à leur point d'articulation à l'ossature centrale A, pour former avantageusement une poignée de traction en position « chariot de courses » ou de poussée en position « chariot-diable ».

Le moyen d'accrochage amovible de l'ossature centrale A à l'ossature de seconde extrémité C peut être porté par au moins un bras latéral de l'ossature centrale A pour s'accrocher au bras latéral correspondant de l'ossature de seconde extrémité C.

Le moyen d'accrochage amovible de l'ossature centrale A à l'ossature de première extrémité B peut être porté par un bras latéral de l'ossature centrale A pour s'accrocher au premier repli correspondant de l'ossature de première extrémité B ou lorsqu'elle est prévue à la liaison entre les premiers replis de l'ossature de première extrémité B. Selon une première variante, au moins d'un côté, une liaison présentant une articulation dans sa partie médiane peut être reliée d'une part à une bordure latérale de la pièce de support D et d'autre part sur le second repli du bras latéral correspondant de l'ossature centrale A.

Selon une seconde variante, au moins d'un côté, de préférence des deux côtés, la bordure correspondante de la pièce de support D se prolonge au-delà de l'axe d'articulation par un bras replié vers l'intérieur, afin que, lors de la mise en position « chariot-diable », ledit bras replié vienne en butée contre le bras latéral correspondant de l'ossature centrale A.

Les ossatures A, B et C et la pièce de support D peuvent être réalisées chacune en un profilé coudé pour former les replis nécessaires.

Ces profilés peuvent présenter toute section transversale. Ils peuvent par exemple être des profilés de section transversale en forme de L, de U ou autre. De façon avantageuse, les profilés peuvent être de tube de n'importe quelle section transversale, telle que des sections transversales de forme ronde, ovale ou carrée.

Les seconds replis de l'ossature centrale A peuvent former un V évasé vers le haut dans les positions « siège » ou « chaise longue » ou « banquette », l'axe de la ou des roues étant fixé sous la région de pointe du V, les roues étant montées intérieurement ou extérieurement aux seconds replis de l'ossature centrale A.

Le chariot selon l'invention peut être apte à recevoir, en position « chariot de courses » ou en position « chariot-diable », un cabas introduit par le haut dans l'espace entre l'ossature centrale A et l'ossature de première extrémité B, des moyens étant avantageusement prévus sur la région supérieure du cabas pour sa fixation, dans cette position, sur l'ossature de seconde extrémité C.

Les bras de l'ossature de seconde extrémité C et/ou, lorsqu'elle est présente, la liaison entre ceux-ci, peuvent porter, extérieurement dans la position « chariot de courses », des moyens amovibles complémentaires de moyens portés par un accessoire apte à venir s'accrocher contre l'ossature de seconde extrémité (C) en position « chariot de courses ». L'accessoire peut alors consister en un siège-bébé, un moyen complémentaire de transport tel qu'un cabas, un sac à jouet, un parasol, ou une glacière, porté par une structure portant les moyens d'accrochage sur l'ossature de seconde extrémité (C).

Pour mieux illustrer l'objet de la présente invention, on va en décrire ci-après, à titre indicatif et non limitatif, plusieurs modes de réalisation particuliers avec référence au dessin annexé.

Sur ce dessin :
- [Fig. 1] est une vue en perspective d'un chariot de courses selon la présente invention vu dans sa position « chaise longue » ;
- [Fig. 2] est une vue analogue à la Figure 1, les roues du chariot selon l'invention étant positionnées sur la partie extérieure du chariot ;
- [Fig. 3] est une vue de profil du chariot selon la Figure 1 vu dans sa position « chariot de courses » ;
- [Fig. 4] est une vue de profil du chariot selon la Figure 1 vu dans sa position « siège » ;
- [Fig. 5] est une vue de profil du chariot selon la Figure 1 vu dans sa position « chaise longue » ;
- [Fig. 6] est une vue de profil du chariot selon la Figure 1 vu dans sa position « banquette » ;
- [Fig. 7] est une vue en perspective du chariot vu dans sa position « chariot-diable », une variante de réalisation de la pièce de support étant montrée en traits mixtes sur cette figure ;
- [Fig. 8] est une vue de détail du détail VIII sur la Figure 7 ;
- [Fig. 9] est une vue de détail du détail IX sur la Figure 7 ;
- [Fig. 10] est une vue du chariot vu dans sa position « siège » montrant le dos du dossier du siège, la variante de réalisation de la pièce de support représentée sur la Figure 7 apparaissant également en traits mixtes sur cette figure ;
- [Fig. 11] est une vue à plus grande échelle d'un crochet de fixation de l'ossature centrale à l'ossature de première extrémité dans sa position débloquée ;
- [Fig. 12] est une vue analogue à la Figure 11, le crochet de blocage étant dans sa position de blocage ; et

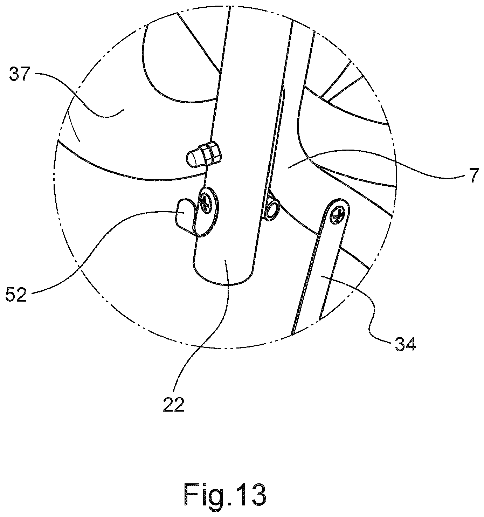

- [Fig. 13] est une vue de détail du détail XIII sur la Figure 7.

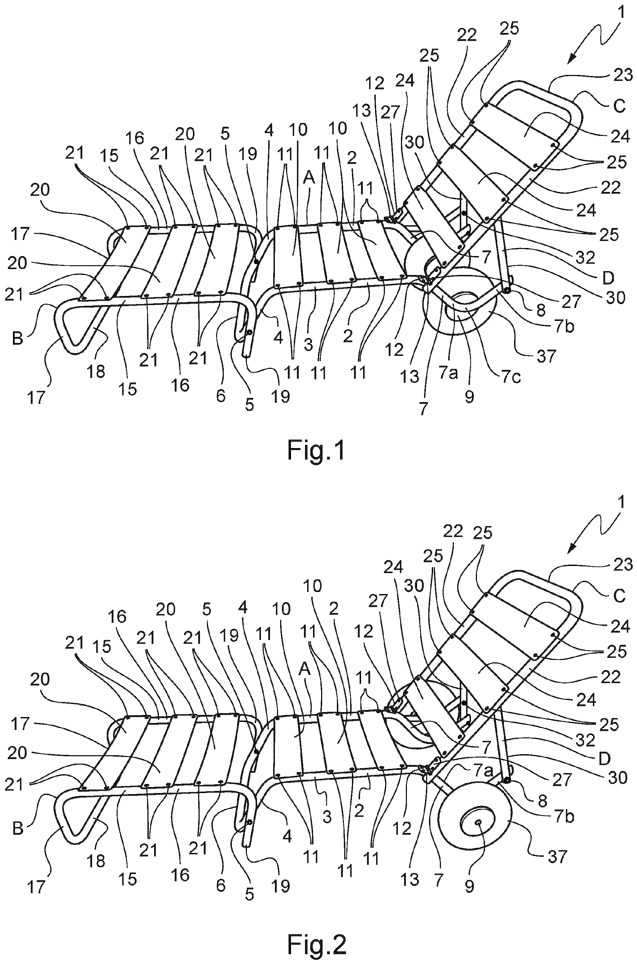

Sur la Figure 1, on a représenté le chariot de courses 1 selon un mode de réalisation de la présente invention dans sa position « chaise-longue ».

Le chariot 1 est formé d'une ossature réalisée en quatre parties, à savoir :
- une ossature centrale A ;
- une ossature de première extrémité B ;
- une ossature de seconde extrémité C ; et
- une pièce de support D.

L'ossature centrale A est formée de deux bras latéraux 2 qui comptent chacun une partie centrale 3, parallèle au sol lorsque le chariot 1 se trouve dans la position « chaise-longue » représentée sur la Figure 1.

La partie centrale 3 de chaque bras latéral 2 se prolonge à une première extrémité par un premier repli 4, replié à un angle de 135° sur l'exemple représenté.

Chacun des premiers replis 4 portent en leur centre un axe 5, de direction perpendiculaire à celle de la partie centrale 3, dont le rôle sera indiqué ci-après.

Les premiers replis 4 de chaque bras latéral 2 sont repliés à leur tour à leur extrémité à un angle de 90° pour former une traverse de jonction 5 qui relie les deux premiers replis 4.

A leur seconde extrémité, la partie centrale 3 de chaque bras latéral 2 se prolonge par un second repli 7 qui comporte une première branche 7a repliée à un angle de 135° par rapport à la partie centrale 3 et ladite première branche 7a étant également repliée à un angle de 90° pour former une seconde branche 7b. A leur extrémité libre, chaque seconde branche 7b porte un axe 8 dont le rôle sera indiqué ci-après.

Les branches 7a et 7b forment un V évasé vers le haut lorsque le chariot 1 se trouve dans la position « chaise-longue ». La pointe 7c du V évasé porte un axe 9 dont le rôle sera indiqué ci-après.

Les parties centrales 3 de chaque bras latéral 2 sont réunies sur leur partie extérieure lorsque le chariot 1 se trouve dans la position « chaise-longue » par trois bandes de matière 10, chaque bande étant fixée sur la partie centrale 3 du bras latéral 2 correspondant par deux vis 11 placées dans les coins de la bande de matière 10. Ces bandes de matière 10 peuvent être en aluminium, en matière plastique ou en toile.

La fixation des bandes 10 pourrait être également faite par tout moyen approprié, tel que par des rivets, par soudure ou par collage.

Au niveau du point d'inflexion entre la partie centrale 3 et de la première branche 7a du second repli 7, chaque bras latéral 2 porte extérieurement sur son côté supérieur une platine 12 portant des charnons 13 et fixée par des vis et dont le rôle sera indiqué ci -après.

La fixation de la platine 12 pourrait être également faite par tout moyen approprié, tel que par des rivets, par soudure ou par collage.

L'un des bras latéraux 2 porte au niveau de la première branche 7a du second repli 7, un axe 14, de direction perpendiculaire à celle de la partie centrale 3 du bras 2 correspondant et dont le rôle sera indiqué ci-après. L'ossature de première extrémité B est formé de deux bras latéraux 15 qui comptent chacun une partie centrale 16, parallèle au sol lorsque le chariot 1 se trouve dans la position « chaise-longue » représentée sur la Figure 1.

La partie centrale 16 de chaque bras latéral 15 se prolonge à une première extrémité par un premier repli 17, replié à un angle de 90° sur l'exemple représenté.

Les premiers replis 17 de chaque bras latéral 15 sont repliés à leur tour à leur extrémité à un angle de 90° pour former une traverse de jonction 18 qui relie les deux premiers replis 17.

A leur seconde extrémité, la partie centrale 16 de chaque bras latéral 15 se prolonge par un second repli 19 replié à 90° du même côté que les premiers replis 17.

Les parties centrales 16 de chaque bras latéral 15 sont réunies sur leur partie extérieure lorsque le chariot 1 se trouve dans la position « chaise-longue » par trois bandes de matière 20, chaque bande étant fixée sur la partie centrale 16 du bras latéral 15 correspondant par deux vis 21 placées dans les coins de la bande de matière 20. Ces bandes de matière 20 peuvent être en aluminium, en matière plastique ou en toile.

La fixation des bandes 20 pourrait être également faite par tout moyen approprié, tel que par des rivets, par soudure ou par collage.

Les seconds replis 19 de l'ossature de première extrémité B et les premiers replis 4 de l'ossature centrale A sont reliés les uns aux autres par l'intermédiaire de l'axe 5 correspondant qui passe par le centre du second repli 19 correspondant de l'ossature de première extrémité B. En faisant ainsi, l'ossature centrale A et l'ossature de première extrémité B peuvent tourner l'une par rapport à l'autre afin que le chariot 1 puisse prendre ses différentes positions.

L'ossature de seconde extrémité C est formée de deux bras latéraux identiques parallèles 22 repliés à l'une de leur extrémité à un angle de 90° pour former une traverse de jonction 23.

Les bras latéraux 22 sont réunis sur leur partie extérieure lorsque le chariot 1 se trouve dans la position « chaise-longue » par trois bandes de matière 24, chaque bande étant fixée sur le bras latéral 22 correspondant par deux vis 25 placées dans les coins de la bande de matière 24. Ces bandes de matière 24 peuvent être en aluminium, en matière plastique ou en toile.

La fixation des bandes 24 pourrait être également faite par tout moyen approprié, tel que par des rivets, par soudure ou par collage.

La bande de matière 24 centrale porte à l'arrière de celle-ci une cornière 240 dont la première aile 241 est fixée à l'une des bordures de la bande de matière 24 et la seconde aile 242 est tournée vers le bas lorsque le chariot est dans sa position chaise longue. Le rôle de la cornière 240 sera indiqué ci-après.

A leur extrémité opposée à l'extrémité portant la traverse de jonction 23, chaque bras latéral 22 porte extérieurement une platine 26 portant des charnons 27 et fixée par des vis 28.

Les charnons 27 portés par l'ossature de seconde extrémité C sont placés en correspondance des charnons 13 portés par l'ossature centrale A. Un axe 29 (non représenté) est placé dans les charnons 27 et 13.

En faisant ainsi, deux charnières sont formées entre l'ossature centrale A et l'ossature de seconde extrémité C au niveau des bras latéraux correspondant grâce auxquelles l'ossature de seconde extrémité C pourra pivoter par rapport à l'ossature centrale pour que le chariot 1 de l'invention puisse prendre ses différentes positions.

La pièce de support D comporte deux bras latéraux 30 réunis à l'une de leurs extrémités par une traverse de jonction 31.

L'un des bras latéraux 30 porte un axe 32 dont le rôle sera indiqué ci-après.

Dans un mode de réalisation non représentée, les bras latéraux de la pièce de support peuvent être reliés par des bandes de matière.

La pièce de support D est reliée à l'ossature centrale A par l'intermédiaire de chaque axe 8 passant à travers le bras latéral 30 correspondant au voisinage de leurs extrémités libres. En faisant ainsi, la pièce de support D est apte à se déplacer en rotation par rapport à l'ossature centrale A.

La pièce de support D et l'ossature centrale A sont également reliés par une articulation 33. L'articulation 33 comporte deux bras 34 et 35 reliés entre eux à l'une de leur extrémités respectives par un axe 36.

Le bras 34 est relié à l'ossature centrale A par l'intermédiaire de l'axe 14 qui passe par l'extrémité libre du bras 34.

Le bras 35 est relié à la pièce de support D par l'intermédiaire de l'axe 32 qui passe par l'extrémité libre du bras 35.

Le rôle de l'articulation 33 sera indiqué ci-après.

Le chariot 1 comporte également deux roues 37 qui sont portées intérieurement par l'axe 9 de l'ossature centrale A.

Tel que cela est représenté sur la Figure 2, les roues 37' peuvent également être portées extérieurement par l'axe 9 de l'ossature centrale A.

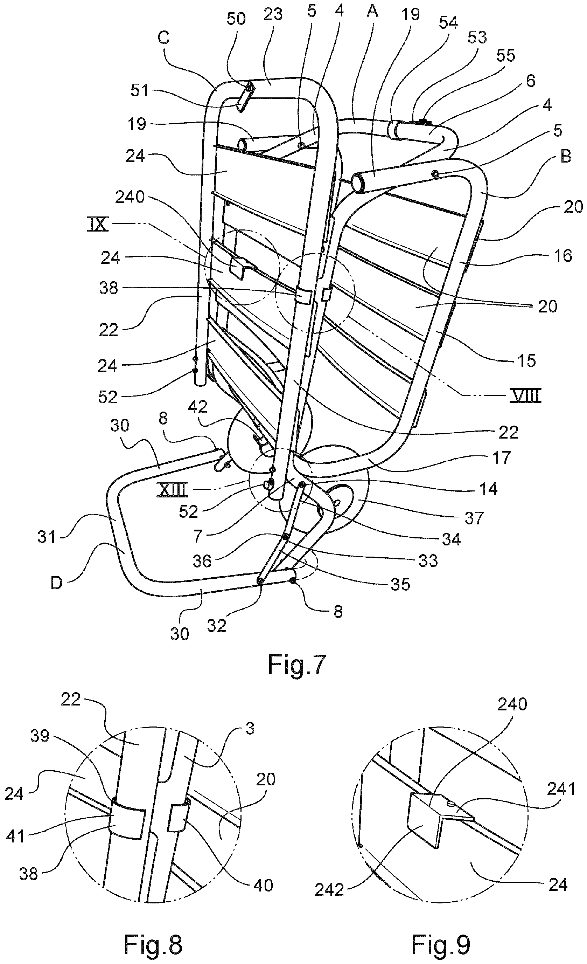

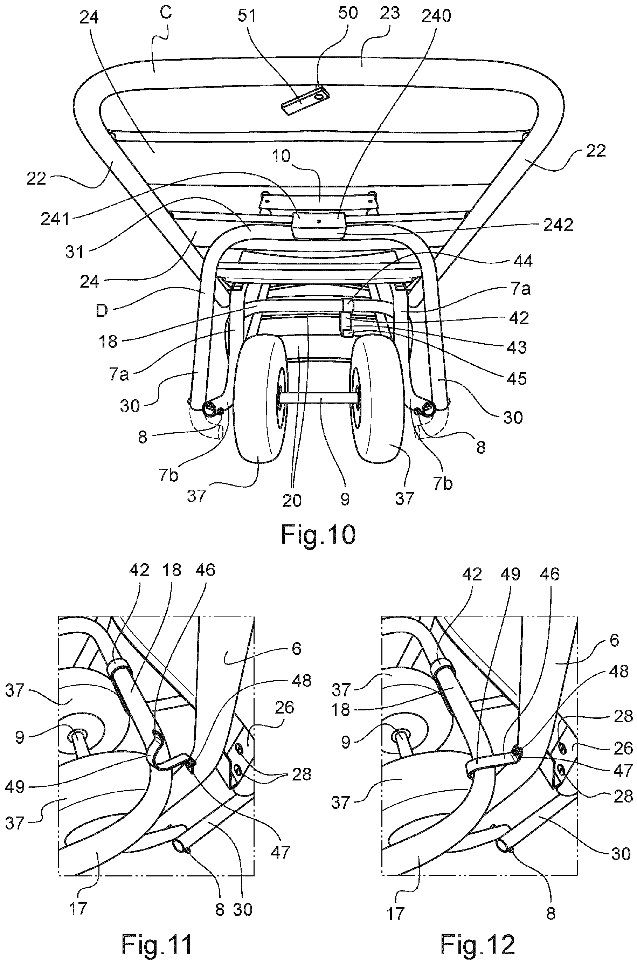

On se réfère maintenant aux Figures 7 et 8. Afin de bloquer l'ossature centrale A et l'ossature de seconde extrémité C, le chariot possède un moyen de blocage 38. Le moyen de blocage 38 comporte une plaque centrale 39 recourbée à chacune de ses extrémité par une première partie de crochet 40 et une seconde partie de crochet 41. Le rayon de courbure de la première partie de crochet 40 et de la seconde partie de crochet 41 correspond au rayon des tubes qui forment les parties latérales de l'ossature centrale et de l'ossature de seconde extrémité avec lesquelles les parties de crochet 41 et 42 viennent s'engager. Le moyen de blocage 38 peut être en aluminium ou en matière plastique. De la même manière, afin de bloquer l'ossature de première extrémité B et la pièce de support D, le chariot possède un moyen de blocage 42. Le moyen de blocage 42 comporte une plaque centrale 43 recourbée à chacune de ses extrémité par une première partie de crochet 44 et une seconde partie de crochet 45. Le rayon de courbure de la première partie de crochet 44 et de la seconde partie de crochet 45 correspond au diamètre des tubes qui forment la traverse de jonction 18 et la traverse de jonction 31 avec lesquelles les parties de crochet 44 et 45 viennent s'engager. Le moyen de blocage 42 peut être en aluminium ou en matière plastique. On se réfère maintenant aux Figures 11 et 12. Afin de bloquer l'ossature centrale A et l'ossature de première extrémité B, le chariot possède un moyen de blocage 46. Le moyen de blocage 46 comporte une platine de base 47 traversée par un axe 48, lequel est fixé sous le second repli 7 au niveau du point d'inflexion entre le bras latéral 3 et la première branche 7a. Le moyen de blocage 46 peut être en aluminium ou en matière plastique.

A l'une de ses extrémités, la platine 47 se prolonge par un partie de crochet 49 dont le rayon de courbure correspond au diamètre du tube de la traverse de jonction 18.

Pour passer de sa position débloquée représentée sur la Figure 11 à sa position de blocage représentée sur la Figure 12, on fait pivoter le moyen de blocage autour de l'axe 48 de telle sorte que la partie de crochet 49 vienne en prise avec la traverse de jonction 18 de l'ossature de première extrémité B.

On se réfère maintenant à la Figure 7. Sur cette figure, la traverse de jonction 23 porte extérieurement un axe 50, une platine 51 étant fixée sur l'extrémité libre de l'axe 50 et pouvant tourner autour de celui-ci.

Au voisinage de leur extrémité, les bras latéraux 22 portent des crochets 52 ouverts vers le haut dans la position « chariot de courses ». Ensembles la platine 51 et les crochets 52 permettent de recevoir un accessoire tel qu'un siège bébé (non représenté). Le siège bébé porte alors des tiges qui sont reçues dans les crochets 52 et une partie de poignée qui est bloquée en position par la platine 51, celle-ci étant alors perpendiculaire à la direction de la traverse de jonction 23, la poignée étant alors reçue entre la platine 51 et la traverse de jonction 23.

La chariot porte également un moyen d'accrochage 53 à une bicyclette. Le moyen d'accrochage 53 est porté par la traverse de jonction 6 de l'ossature centrale A. Le moyen d'accrochage 53 comporte une boucle 54 qui entoure la traverse de jonction 6 et est apte à tourner autour de celle-ci. La boucle se prolonge par une tige 55 à l'extrémité de laquelle on peut venir attacher une bicyclette par des moyens classiques.

Comme représenté en traits mixtes sur les Figures 7 et 10, un autre mode de réalisation de la pièce de support D est représenté, suivant lequel la bordure correspondante 30 de la pièce de support D se prolonge au-delà de l'axe d'articulation 8 par un bras replié vers l'intérieur, afin que, lors de la mise en position « chariot-diable », ledit bras replié vienne en butée contre le bras latéral correspondant 2 de l'ossature centrale A.

On va maintenant décrire le passage du chariot selon la présente invention dans ses différentes positions. Lorsqu'il est dans sa position chaise longue, le chariot 1 repose sur les roues 37 ainsi que sur la traverse de jonction 6 de l'ossature centrale A, la traverse de jonction 18 et l'extrémité libre des seconds replis 19 de l'ossature de première extrémité B qui sont en contact avec le sol.

Afin de former la partie dossier, l'ossature de seconde extrémité C est repliée par rapport à l'ossature centrale A et la pièce de support D est repliée de telle sorte que la traverse de jonction 31 vienne en contrat contre la partie arrière de la bande de matière 24 centrale de l'ossature de seconde extrémité C et soit bloquée par la cornière 240, la bande de matière 24 et les ailes 241 et 242 de la cornière 240 formant un espace de réception de la traverse de jonction 31. En faisant ainsi, l'ossature de seconde extrémité C est bloquée dans sa position qui lui permet de former le dossier de la chaise longue.

Dans un autre mode de réalisation non représenté, la cornière 240 peut être remplacée par une crémaillère permettant plusieurs possibilités de réglage.

L'ossature centrale A sert d'assise et l'ossature de première extrémité B sert de repose jambe pour que l'utilisateur puisse s'installer les jambes allongées.

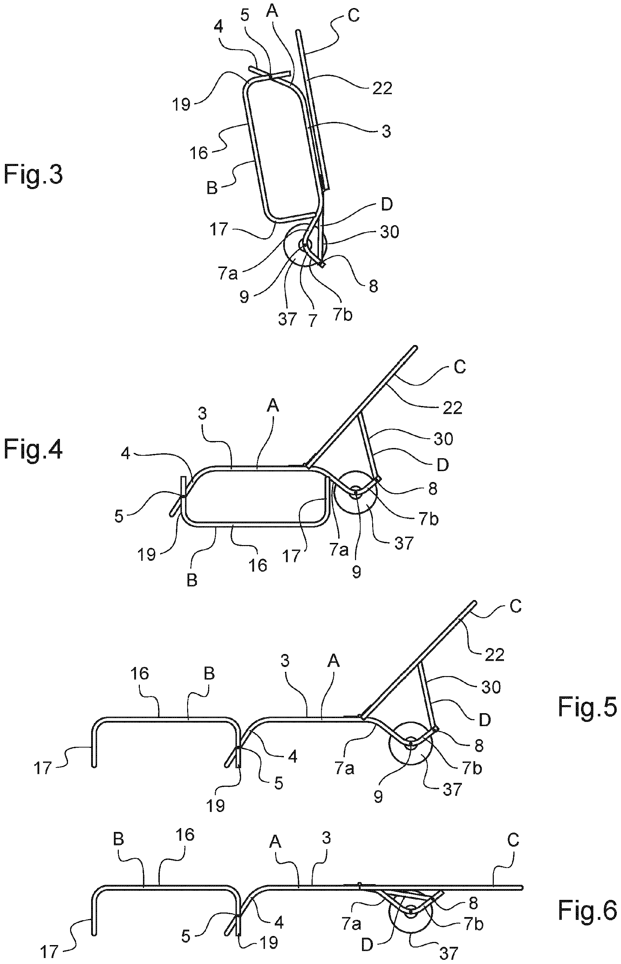

Si l'on se réfère à la figure 6, le chariot 1 est dans sa position « banquette ». Afin de passer de la position « chaise-longue » à la position « banquette », la partie de support D est rabattue contre l'ossature centrale A. Ensuite, l'ossature de seconde extrémité C est rabattue afin qu'elle vienne dans le prolongement de l'ossature centrale A et de l'ossature de première extrémité B pour que les trois ossatures A, B et C forment une banquette sur laquelle une personne peut s'allonger ou sur laquelle plusieurs personnes peuvent s'asseoir en même temps. Dans cette configuration, l'ossature de seconde extrémité C repose alors de chaque côté sur l'extrémité libre de chaque bras 2 de l'ossature centrale A.

Si l'on se réfère à la Figure 4, le chariot 1 est dans sa position « siège ». Afin de passer de la position « chaise-longue » à la position « siège », l'ossature de première extrémité B est rabattue de telle sorte qu'elle vient se positionner contre l'ossature centrale A. Dans cette position « siège », le chariot 1 repose sur les roues 37 ainsi que sur les bordures extérieures des parties centrales 16 des bras latéraux 15 de l'ossature de première extrémité B.

Si l'on se réfère à la Figure 3, le chariot 1 est dans sa position « chariot de courses ». Afin de passer de la position « siège » à la position « chariot de courses », l'ossature de seconde extrémité C est rabattue contre l'ossature centrale A. La pièce de support D est rabattue contre l'ossature centrale.

Le chariot est ensuite relevé pour que les bras latéraux des ossatures soient sensiblement verticaux. On peut alors faire rouler le chariot 1 sur les roues 37 en se servant de la traverse de jonction 23 de la seconde ossature d'extrémité C comme poignée.

Dans cette position, l'espace délimité par les parties centrales 3 et les premiers replis 4 des bras latéraux 2 de l'ossature centrale A et par les parties centrales 16 et les premiers replis 17 et seconds replis 19 des bras latéraux 15 de l'ossature de première extrémité B forme un espace de réception pour un sac cabas qui sera introduit par le haut dans cet espace et qu'on pourra venir fixer sur la barre de jonction 23 de l'ossature de seconde extrémité C.

Si l'on se réfère à la Figure 7, le chariot 1 est dans sa position « chariot-diable ». Afin de passer de la position « chariot de courses » à la position « chariot-diable », la pièce de support D est déployée à son extension maximale, les deux bras 34 et 35 de l'articulation 33 étant sensiblement dans le prolongement l'un de l'autre.

En faisant ainsi, la partie de support D est apte à recevoir un objet et on peut se servir de la barre de jonction 23 de l'ossature de seconde extrémité C comme poignée pour pousser le chariot dans sa position « chariot-diable ».

## Revendications

1. - Chariot de courses (1) transformable apte à passer de sa position proprement dite « chariot de courses » à l'une des positions suivantes :
- « Chariot-diable » ;
- « siège » ;
- « chaise longue » ; et
- « banquette »,
comportant une ossature montée sur au moins une roue (37), **caractérisé par le fait que** l'ossature est réalisée en quatre parties, à savoir :
- une ossature dite centrale (A) formée de deux bras latéraux identiques parallèles (2) qui comptent chacun une partie centrale (3) se prolongeant à une première extrémité par un premier repli (4) et à l'autre extrémité par un second repli (7) du même côté que le premier repli (4), les parties centrales (3) de ces deux bras (2) étant réunies par au moins une bande de matière (10) ;
- du côté des premiers replis (4) de la partie centrale (3), une ossature dite de première extrémité (B) formée de deux bras latéraux identiques parallèles (15) qui comportent chacun une partie centrale (16) se prolongeant à une première extrémité par un premier repli (17) et à l'autre extrémité par un second repli (19) du même côté que le premier repli (17), les parties centrales (16) de ces deux bras (15) étant réunies par au moins une bande de matière (20) ; chaque second repli (19) de l'ossature de première extrémité (B) étant monté mobile en rotation sur chaque premier repli (4) de l'ossature centrale (A) ;
- du côté des seconds replis (7) de l'ossature centrale (A), une ossature dite de seconde extrémité (C) formée de deux bras latéraux identiques parallèles (22) réunis par au moins une bande de matière (24), montés aptes à pivoter par une de leurs extrémités en un point du bras latéral (2) correspondant de l'ossature centrale (A) qui se trouve au voisinage du début du second repli (7) de cette dernière ;
- une pièce dite de support (D) comportant deux bordures latérales (30) articulées chacune (en 8) à l'extrémité correspondante des seconds replis (7) des bras latéraux (2) de l'ossature centrale (A), et une bordure transversale d'extrémité (31) apte à venir bloquer l'ossature de seconde extrémité (C) dans une position inclinée par rapport à l'ossature centrale (A) ;
ladite ou lesdites roues (37) étant portées par au moins un bras latéral (2) de l'ossature centrale (A) dans sa seconde partie de repli (7), l'axe (9) de la ou des roues (37) étant perpendiculaire aux bras latéraux de l'ossature centrale (A) ;
• la position « chariot de courses » étant obtenue par application l'une contre l'autre de l'ossature centrale (A) et de l'ossature de seconde extrémité (C), un moyen de blocage amovible (38) de ces deux ossatures étant prévu, et par mise en appui des deux premiers replis (17) de l'ossature de première extrémité (B) contre les seconds replis (7) respectifs de l'ossature centrale (A) ; et la pièce support (D) étant, en position totalement relevée, un moyen de blocage (46) amovible étant prévu pour maintenir dans cette position l'ossature de première extrémité (B) contre l'ossature centrale (A) et au moins un moyen de blocage (42) amovible étend prévu pour maintenir la pièce de support (D) dans sa position relevée ;
• la position « chariot-diable » différant de la position « chariot de courses » **par le fait que** la pièce de support (D) est rabattue, un moyen de blocage amovible (46) étant prévu pour maintenir l'ossature de première extrémité (B) contre l'ossature centrale (A) ;
• la position « siège » différant de la position « chariot de courses » **par le fait que** l'ossature de seconde extrémité (C) est inclinée par rapport à l'ossature centrale (A), et que la pièce de support (D) vient bloquer l'ossature de seconde extrémité (C) dans sa position inclinée ;
• la position « chaise longue » différant de la position siège **par le fait que** l'ossature de première extrémité (B) est placée dans le prolongement de l'ossature centrale (A) ;
• la position « banquette » différant de la position « chaise longue » **par le fait que** la pièce de support (D) est dans sa position appliquée contre l'ossature centrale (A) et que l'ossature de seconde extrémité (C) vient dans le prolongement de l'ossature centrale (A).

2. - Chariot selon la revendication 1, **caractérisé par le fait que** les deux premiers replis (4) de l'ossature centrale (A) sont reliés pour former une pièce en U.

3. - Chariot selon la revendication 2, **caractérisé par le fait que** la base du U qui relie les deux premiers replis (4) de l'ossature centrale (A) porte un moyen d'accrochage du chariot à un moyen de locomotion, tel qu'une bicyclette.

4. - Chariot selon l'une des revendications 1 à 3, **caractérisé par le fait que** les deux premiers replis (17) de l'ossature de première extrémité (B) sont reliés pour former un U, lequel porte avantageusement le moyen d'accrochage (42) amovible à la pièce de support (D).

5. - Chariot selon l'une des revendications 1 à 4, **caractérisé par le fait que** les deux bras latéraux (22) de l'ossature de seconde extrémité (C) sont réunis à leurs bordures opposées à leur point d'articulation à l'ossature centrale (A), pour former avantageusement une poignée de traction en position « chariot de courses » ou de poussée en position « chariot-diable ».

6. - Chariot selon l'une des revendications 1 à 5, **caractérisé par le fait que** le moyen d'accrochage amovible (38) de l'ossature centrale (A) à l'ossature de seconde extrémité (C) est porté par au moins un bras latéral (2) de l'ossature centrale (A) pour s'accrocher au bras latéral (22) correspondant de l'ossature de seconde extrémité (C).

7. - Chariot selon l'une des revendications 1 à 5, **caractérisé par le fait que** le moyen d'accrochage (46) amovible de l'ossature centrale (A) à l'ossature de première extrémité (B) est porté par un bras latéral (2) de l'ossature centrale (A) pour s'accrocher au premier repli (17) correspondant de l'ossature de première extrémité (B) ou lorsqu'elle est prévue à la liaison (18) entre les premiers replis (17) de l'ossature de première extrémité (B).

8. - Chariot selon l'une des revendications 1 à 7, **caractérisé par le fait qu'**au moins d'un côté, une liaison (33) présentant une articulation (36) dans sa partie médiane est reliée d'une part à une bordure latérale (30) de la pièce de support (D) et d'autre part sur le second repli (7) du bras latéral (2) correspondant de l'ossature centrale (A).

9. - Chariot selon l'une des revendications 1 à 8, **caractérisé par le fait qu'**au moins d'un côté, de préférence des deux côtés, la bordure correspondante (30) de la pièce de support (D) se prolonge au-delà de l'axe d'articulation (8) par un bras replié vers l'intérieur, afin que, lors de la mise en position « chariot-diable », ledit bras replié vienne en butée contre le bras latéral correspondant (2) de l'ossature centrale (A).

10. - Chariot selon l'une des revendications 3 à 9, **caractérisé par le fait que** les ossatures (A), (B) et (C) et la pièce de support (D) sont réalisées chacune en un profilé coudé pour former les replis nécessaires.

11. - Chariot selon l'une des revendications 1 à 10, **caractérisé par le fait que** les seconds replis (7) de l'ossature centrale (A) forment un V évasé vers le haut dans les positions « siège » ou « chaise longue » ou « banquette », l'axe (9) de la ou des roues (37) étant fixé sous la région de pointe du V, les roues étant montées intérieurement ou extérieurement aux seconds replis (7) de l'ossature centrale (A).

12. - Chariot selon l'une des revendications 1 à 11, **caractérisé par le fait qu'**il est apte à recevoir, en position « chariot de courses » ou en position « chariot-diable », un cabas introduit par le haut dans l'espace entre l'ossature centrale (A) et l'ossature de première extrémité (B), des moyens étant avantageusement prévus sur la région supérieure du cabas pour sa fixation, dans cette position, sur l'ossature de seconde extrémité (C).

13. - Chariot selon l'une des revendications 1 à 12, **caractérisé par le fait que** les bras (22) de l'ossature de seconde extrémité (C) et/ou, lorsqu'elle est présente, la liaison (23) entre ceux-ci, portent, extérieurement dans la position « chariot de courses », des moyens amovibles (51 ; 52) complémentaires de moyens portés par un accessoire apte à venir s'accrocher contre l'ossature de seconde extrémité (C) en position « chariot de courses ».

14. - Chariot selon la revendication 13, **caractérisé par le fait que** l'accessoire consiste en un siège-bébé, un moyen complémentaire de transport tel qu'un cabas, un sac à jouet, un parasol, ou une glacière, porté par une structure portant les moyens d'accrochage sur l'ossature de seconde extrémité (C).

## Patentansprüche

1. - Umwandelbarer Einkaufswagen (1), der imstande ist, aus seiner eigentlichen Position "Einkaufswagen" in eine der folgenden Positionen zu wechseln:
- "Transportwagen";
- "Sitz";
- "Liege"; und
- "Sitzbank",
mit einem Gerüst, das auf mindestens einem Rad (37) angebracht ist, **dadurch gekennzeichnet, dass** das Gerüst aus vier Teilen hergestellt ist, nämlich:
- einem zentralen Gerüst (A), das aus zwei identischen parallelen Seitenarmen (2) gebildet wird, die jeweils einen Mittelteil (3) aufweisen, der an einem ersten Ende durch eine erste Faltung (4) und am anderen Ende durch eine zweite Faltung (7) auf derselben Seite wie die erste Faltung (4) verlängert wird, wobei die Mittelteile (3) dieser beiden Arme (2) durch mindestens einen Materialstreifen (10) verbunden sind;
- auf der Seite der ersten Faltungen (4) des Mittelteils (3), einem ersten Gerüstende (B), das aus zwei identischen parallelen Seitenarmen (15) besteht, die jeweils einen Mittelteil (16) aufweisen, der an einem ersten Ende durch eine erste Faltung (17) und am anderen Ende durch eine zweite Faltung (19) auf derselben Seite wie die erste Faltung (17) verlängert wird, wobei die Mittelteile (16) dieser beiden Arme (15) durch mindestens einen Materialstreifen (20) verbunden sind; wobei jede zweite Faltung (19) des ersten Gerüstendes (B) rotationsbeweglich an jeder ersten Faltung (4) des zentralen Gerüsts (A) angebracht ist;
- auf der Seite der zweiten Faltungen (7) des zentralen Gerüsts (A), einem zweiten Gerüstende (C), das aus zwei identischen parallelen Seitenarmen (22) besteht, die durch mindestens einen Materialstreifen (24) verbunden sind, die so angebracht sind, dass sie imstande sind, mit einem ihrer Enden an einem Punkt des entsprechenden Seitenarms (2) des zentralen Gerüsts (A) schwenken können, der sich in der Nähe des Beginns der zweiten Faltung (7) des letzteren befindet;
- einem Stützteil (D) mit zwei Seitenrändern (30), die jeweils (bei 8) am entsprechenden Ende der zweiten Faltungen (7) der Seitenarme (2) des zentralen Gerüsts (A) angelenkt sind, und einem quer verlaufenden Endrand (31), der imstande ist, das zweite Gerüstende (C) in einer in Bezug auf das zentrale Gerüst (A) geneigten Position zu arretieren;
wobei das Rad oder die Räder (37) von mindestens einem Seitenarm (2) des zentralen Gerüsts (A) in seinem zweiten Faltungsabschnitt (7) getragen werden, wobei die Achse (9) des Rads oder der Räder (37) senkrecht zu den Seitenarmen des zentralen Gerüsts (A) ist;
• wobei die Position "Einkaufswagen" durch Aneinanderdrücken des zentralen Gerüsts (A) und des zweiten Gerüstendes (C) erhalten wird, wobei ein lösbares Arretiermittel (38) dieser beiden Gerüste vorgesehen ist, und durch Anlegen der beiden ersten Faltungen (17) des ersten Gerüstendes (B) an die jeweiligen zweiten Faltungen (7) des zentralen Gerüsts (A); und wobei, wenn das Stützteil (D) in der vollständig angehobenen Position ist, ein lösbares Arretiermittel (46) vorgesehen ist, um das erste Gerüstende (B) am zentralen Gerüst (A) in dieser Position zu halten, und mindestens ein lösbares Arretiermittel (42) vorgesehen ist, um das Stützteil (D) in seiner angehobenen Position zu halten;
• wobei sich die Position "Transportwagen" von der Position "Einkaufswagen" dadurch unterscheidet, dass das Stützteil (D) heruntergeklappt ist, wobei ein lösbares Arretiermittel (46) vorgesehen ist, um das erste Gerüstende (B) am zentralen Gerüst (A) zu halten;
• wobei sich die Position "Sitz" von der Position "Einkaufswagen" dadurch unterscheidet, das zweite Gerüstende (C) in Bezug auf das zentrale Gerüst (A) geneigt ist und das Stützteil (D) das zweite Gerüstende (C) in seiner geneigten Position arretiert;
• wobei sich die Position "Liege" von der Position "Sitz" dadurch unterscheidet, das erste Gerüstende (B) in der Verlängerung des zentralen Gerüsts (A) platziert ist;
• wobei sich die Position "Bank" von der Position "Liege" dadurch unterscheidet, dass das Stützteil (D) in seiner am zentralen Gerüst (A) anliegenden Position ist und das zweite Gerüstende (C) in die Verlängerung des zentralen Gerüsts (A) kommt.

2. - Wagen nach Anspruch 1, **dadurch gekennzeichnet, dass** die ersten beiden Faltungen (4) des zentralen Gerüsts (A) miteinander verbunden sind, um ein U-Teil zu bilden.

3. - Wagen nach Anspruch 2, **dadurch gekennzeichnet, dass** die Basis des U, die die ersten beiden Faltungen (4) des zentralen Gerüsts (A) verbindet, ein Mittel zum Anhängen des Wagens an ein Fortbewegungsmittel, wie z. B. ein Fahrrad, trägt.

4. - Wagen nach einem der Ansprüche 1 bis 3, **dadurch gekennzeichnet, dass** die ersten beiden Faltungen (17) des ersten Gerüstendes (B) zu einem U verbunden sind, das in vorteilhafter Weise das Mittel zum lösbaren Anhängen (42) am Stützteil (D) trägt.

5. - Wagen nach einem der Ansprüche 1 bis 4, **dadurch gekennzeichnet, dass** die beiden Seitenarme (22) des zweiten Gerüstendes (C) an ihren gegenüberliegenden Rändern an ihrem Gelenkpunkt am zentralen Gerüst (A) verbunden sind, um vorteilhaft einen Griff zum Ziehen in der Position "Einkaufswagen" oder zum Schieben in der Position "Transportwagen" zu bilden.

6. - Wagen nach einem der Ansprüche 1 bis 5, **dadurch gekennzeichnet, dass** das lösbare Einhakmittel (38) des zentralen Gerüsts (A) am zweiten Gerüstende (C) von mindestens einem Seitenarm (2) des zentralen Gerüsts (A) getragen wird, um an dem entsprechenden Seitenarm (22) des zweiten Gerüstendes (C) einzuhaken.

7. - Wagen nach einem der Ansprüche 1 bis 5, **dadurch gekennzeichnet, dass** das lösbare Einhakmittel (46) des zentralen Gerüsts (A) am ersten Gerüstende (B) von einem Seitenarm (2) des zentralen Gerüsts (A) getragen wird, um an der entsprechenden ersten Faltung (17) des ersten Gerüstendes (B) einzuhaken, oder wenn vorhanden, an der Verbindung (18) zwischen den ersten Faltungen (17) des ersten Gerüstendes (B).

8. - Wagen nach einem der Ansprüche 1 bis 7, **dadurch gekennzeichnet, dass** mindestens auf einer Seite eine Verbindung (33), die in ihrem Mittelteil ein Gelenk (36) aufweist, einerseits mit einem Seitenrand (30) des Stützteils (D) und andererseits an der zweiten Faltung (7) des entsprechenden Seitenarms (2) des zentralen Gerüsts (A) verbunden ist.

9. - Wagen nach einem der Ansprüche 1 bis 8, **dadurch gekennzeichnet, dass** sich mindestens auf einer Seite, vorzugsweise auf beiden Seiten, der entsprechende Rand (30) des Stützteils (D) über die Gelenkachse (8) hinaus durch einen nach innen gefalteten Arm verlängert, so dass beim Einstellen der Position "Transportwagen" der gefaltete Arm an den entsprechenden Seitenarm (2) des zentralen Gerüsts (A) anstößt.

10. - Wagen nach einem der Ansprüche 3 bis 9, **dadurch gekennzeichnet, dass** die Gerüste (A), (B) und (C) und das Stützteil (D) jeweils aus einem gebogenen Profil gefertigt sind, um die erforderlichen Faltungen zu bilden.

11. - Wagen nach einem der Ansprüche 1 bis 10, **dadurch gekennzeichnet, dass** die zweiten Faltungen (7) des zentralen Gerüsts (A) in den Positionen "Sitz" oder "Liege" oder "Bank" ein sich nach oben erweiterndes V bilden, wobei die Achse (9) des Rades oder der Räder (37) unter dem Spitzenbereich des V befestigt ist, wobei die Räder innen oder außen an den zweiten Faltungen (7) des zentralen Gerüsts (A) angebracht sind.

12. - Wagen nach einem der Ansprüche 1 bis 11, **dadurch gekennzeichnet, dass** er in der Position "Einkaufswagen" oder in der Position "Transportwagen" eine Tasche aufnehmen kann, die von oben in den Raum zwischen dem zentralen Gerüst (A) und dem ersten Gerüstende (B) eingeführt wird, wobei in vorteilhafter Weise Mittel im oberen Bereich der Tasche für ihre Befestigung in dieser Position am zweiten Gerüstende (C) vorgesehen sind.

13. - Wagen nach einem der Ansprüche 1 bis 12, **dadurch gekennzeichnet, dass** die Arme (22) des zweiten Gerüstendes (C) und/oder, wenn vorhanden, die Verbindung (23) zwischen diesen, tragen, außen in der Position "Einkaufswagen" abnehmbare Mittel (51; 52), die komplementär zu den Mitteln sind, die von einem Zubehörteil getragen werden, das in der Position "Einkaufswagen" imstande ist, am zweiten Gerüstende (C) einzuhaken.

14. - Wagen nach Anspruch 13, **dadurch gekennzeichnet, dass** das Zubehörteil aus einem Kindersitz, einem zusätzlichen Transportmittel wie einer Tasche, einer Spielzeugtasche, einem Sonnenschirm oder einer Kühlbox besteht, das von einer Struktur getragen wird, die die Einhakmittel am zweiten Gerüstende (C) trägt.

## Claims

1. - A transformable shopping cart (1) capable of going from its strictly speaking "shopping cart" position to one of the following positions:
- "handcart";
- "seat";
- "deck chair"; and
- "bench",
comprising a framework mounted on at least one wheel (37), **characterized in that** the framework is made of four parts, namely:
- a so-called central framework (A) formed by two identical parallel lateral arms (2) that each comprise a central part (3) extended at a first end by a first fold (4) and at the other end by a second fold (7) on the same side as the first fold (4), the central parts (3) of these two arms (2) being joined by at least one strip of material (10);
- on the side of the first folds (4) of the central part (3), a so-called first end framework (B) formed by two identical parallel lateral arms (15) that each comprise a central part (16) extended at a first end by a first fold (17) and at the other end by a second fold (19) on the same side as the first fold (17), the central parts (16) of these two arms (15) being joined by at least one strip of material (20); each second fold (19) of the first end framework (B) being mounted movable in rotation on each first fold (4) of the central framework (A);
- on the side of the second folds (7) of the central framework (A), a so-called second end framework (C) formed by two identical parallel lateral arms (22) joined by at least one strip of material (24), mounted able to pivot by one of their ends at a point of the corresponding lateral arm (2) of the central framework (A) that is located in the vicinity of the start of the second fold (7) of the latter;
- a so-called support part (D) comprising two lateral edges (30) each articulated (at 8) to the corresponding end of the second folds (7) of the lateral arms (2) of the central framework (A), and a transverse end edge (31) capable of blocking the second end framework (C) in an inclined position relative to the central framework (A);
said wheel(s) (37) being carried by at least one lateral arm (2) of the central framework (A) in its second fold part (7), the axis (9) of the wheel(s) (37) being perpendicular to the lateral arms of the central framework (A);
• the "shopping cart" position being obtained by applying the central framework (A) and the second end framework (C) against one another, a removable blocking means (38) of these two frameworks being provided, and by pressing the first two folds (17) of the first end framework (B) against the respective second folds (7) of the central framework (A); and the support part (D) being, in the fully raised position, a removable blocking means (46) provided to maintain the first end framework (B) in this position against the central framework (A) and at least one removable blocking means (42) being provided to maintain the support part (D) in its raised position;
• the "handcart" position differing from the "shopping cart" position **in that** the support part (D) is folded down, a removable blocking means (46) being provided to maintain the first end framework (B) against the central framework (A);
• the "seat" position differing from the "shopping cart" position **in that** the second end framework (C) is inclined relative to the central framework (A), and **in that** the support part (D) blocks the second end framework (C) in its inclined position;
• the "deck chair" position differing from the seat position **in that** the first end framework (B) is placed in the extension of the central framework (A);
• the "bench" position differing from the "deck chair" position **in that** the support part (D) is in its position applied against the central framework (A) and **in that** the second end framework (C) comes in the extension of the central framework (A).

2. - The cart according to claim 1, **characterized in that** the first two folds (4) of the central framework (A) are connected to form a U-shaped part.

3. - The cart according to claim 2, **characterized in that** the base of the U which connects the first two folds (4) of the central framework (A) carries a means for hooking the cart to a means of locomotion, such as a bicycle.

4. - The cart according to one of claims 1 to 3, **characterized in that** the first two folds (17) of the first end framework (B) are connected to form a U, which advantageously carries the removable hooking means (42) for hooking to the support part (D).

5. - The cart according to one of claims 1 to 4, **characterized in that** the two lateral arms (22) of the second end framework (C) are joined at their edges opposite their point of articulation to the central framework (A), to advantageously form a pull handle in the "shopping cart" position or a push handle in the "handcart" position.

6. - The cart according to one of claims 1 to 5, **characterized in that** the removable hooking means (38) for hooking the central framework (A) to the second end framework (C) is carried by at least one lateral arm (2) of the central framework (A) for hooking to the corresponding lateral arm (22) of the second end framework (C).

7. - The cart according to one of claims 1 to 5, **characterized in that** the removable hooking means (46) for hooking the central framework (A) to the first end framework (B) is carried by a lateral arm (2) of the central framework (A) for hooking to the corresponding first fold (17) of the first end framework (B) or, when it is provided, to the connection (18) between the first folds (17) of the first end framework (B).

8. - The cart according to one of claims 1 to 7, **characterized in that** at least on one side, a connection (33) having an articulation (36) in its middle part is connected on the one hand to a lateral edge (30) of the support part (D) and on the other hand to the second fold (7) of the corresponding lateral arm (2) of the central framework (A).

9. - The cart according to one of claims 1 to 8, **characterized in that** at least on one side, preferably on both sides, the corresponding edge (30) of the support part (D) is extended beyond the articulation axis (8) by an arm folded inwards, so that, when placed in the "handcart" position, said folded arm abuts against the corresponding lateral arm (2) of the central framework (A).

10. - The cart according to one of claims 3 to 9, **characterized in that** the frameworks (A), (B) and (C) and the support part (D) are each made of a bent profile to form the necessary folds.

11. - The cart according to one of claims 1 to 10, **characterized in that** the second folds (7) of the central framework (A) form a V flared upwards in the "seat" or "deck chair" or "bench" positions, the axis (9) of the wheel (s) (37) being fixed under the tip region of the V, the wheels being mounted internally or externally to the second folds (7) of the central framework (A).

12. - The cart according to one of claims 1 to 11, **characterized in that** it is capable of receiving, in the "shopping cart" position or in the "handcart" position, a shopping bag introduced from above into the space between the central framework (A) and the first end framework (B), means being advantageously provided on the upper region of the shopping bag for its attachment, in this position, to the second end framework (C).

13. - The cart according to one of claims 1 to 12, **characterized in that** the arms (22) of the second end framework (C) and/or, when present, the connection (23) between them, carry, externally in the "shopping cart" position, removable means (51; 52) complementary to means carried by an accessory capable of hooking against the second end framework (C) in the "shopping cart" position.

14. - The cart according to claim 13, **characterized in that** the accessory consists of a baby seat, a complementary carrier means such as a shopping bag, a toy bag, a parasol, or a cooler, carried by a structure carrying the means for hooking on the second end framework (C).
